# EUROPÄISCHE PATENTSCHRIFT

(11) **EP 0 893 362 B1**
(45) Veröffentlichungstag und Bekanntmachung des Hinweises auf die Patenterteilung: **02.01.2003**
(21) Anmeldenummer: 98112952.1
(22) Anmeldetag: 13.07.1998
(51) Int. Cl.: B65D 77/06

(54) **Transport- und Lagerbehälter für Flüssigkeiten**
transport and storage container for liquids
Recipient de transport et de stockage pour liquides

(30) Priorität: 23.07.1997 DE 19731518
(43) Veröffentlichungstag der Anmeldung: 27.01.1999
(73) Patentinhaber: PROTECHNA S.A., 1701 Fribourg (CH)
(72) Erfinder: Schütz, Udo, 56242 Selters/Westerwald (DE)
(74) Vertreter: Pürckhauer, Rolf, Dipl.-Ing.

(56) Entgegenhaltungen:
- EP-A- 0 413 886
- EP-A- 0 674 470
- DE-U- 29 510 064
- GB-A- 1 277 595

## Beschreibung

Die Erfindung betrifft Transport- und Lagerbehälter für Flüssigkeiten, mit einem palettenartigen Untergestell, einem austauschbaren Innenbehälter aus Kunststoff mit vier Seitenwänden, einem unteren und einem oberen Boden, einer oberen verschließbaren Einfüllöffnung und einer unteren Auslauföffnung mit einer Entleereinrichtung, einem den Innenbehälter umgebenden Außenmantel, der aus senkrechten und waagrechten Gitterstäben aus Metall gebildet ist, sowie einer auf den Kunststoff-Innenbehälter aufgebrachten gewebe-, netz- oder gitterartigen Umhüllung aus einem elektrisch leitfähigen Material, die den Innenbehälter vollkommen oder teilweise umgibt.

Beim Befüllen und Entleeren von aus der DE 195 11 723 C1 bekannten Flüssigkeitsbehältern dieser Art und beim Rühren von Flüssigkeiten in derartigen Behältern z.B. zu Mischzwecken können durch Flüssigkeitsreibung elektrische Ladungen an den Behälteroberflächen auftreten. Die Hauptgefahr der elektrostatischen Aufladung liegt im Zusammentreffen von Zündquellen mit explosionsfähigen Gemischen von Gasen und Dämpfen.

Wegen der elektrostatischen Aufladbarkeit des Kunststoff-Innenbehälters können Transport- und Lagerbehälter der gattungsgemäßen Art nicht in explosionsgefährdeten Räumen zum Einsatz kommen und nicht mit explosiven Flüssigkeiten befüllt werden.

Eine in der DE-Z Kunststoffe, Bd. 59, 1969, Heft 12, S. 838-842 beschriebene Möglichkeit, eine elektrostatische Aufladung von Glasfaser-Kunststoffbehältern zu vermeiden, sieht vor, elektrisch leitende Gitter in die Wandung der Behälter einzubetten.

Aus der DE 85 19 765.3 U1 sind flexible Transportbehälter aus textilem Material für Schüttgüter bekannt. Zur Vermeidung elektrostatischer Aufladungen ist das flexible Wandmaterial der Behälter mit einer Beschichtung versehen, die aus einer Metallschicht oder Metallstreifen und einem Bindemittel mit darin eingelagerten, elektrisch leitfähigen Teilchen besteht.

Die EP 0 674 470 A1 enthält die Anregung, elektrisch leitfähiges Pulver flächig oder streifenförmig in die Oberfläche eines Kunststoffbehälters zur Aufnahme feuer- und explosionsgefährlicher Medien einzusintern.

Die DE 73 41 620 U1 beschreibt Lagertanks für brennbare Flüssigkeiten aus Glasfaser-Kunststoff mit in die zylindrische Wandung und die Böden einlaminierten, elektrisch leitfähigen Gewebelagen zur Unterbindung elektrostatischer Aufladungen.

Aus der DE 32 14 940 A1 sind Folien mit elektrostatische Ladungen abweisenden Eigenschaften bekannt. Derartige Folien eignen sich zum Verpacken von elektronischen Schaltungsbauteilen, die gegen den schädlichen Einfluß einer elektrostatischen Ladung zu schützen sind. Die Folie hat ursprünglich einen relativ hohen Oberflächenwiderstand, wird jedoch durch Bedrucken mit einem Matrixmuster unter Einsatz von elektrisch leitfähiger Druckfarbe in der Weise, daß auf der bedruckten Oberfläche mindestens eine erste und eine zweite, einander schneidende Gruppe von voneinander im Abstand liegenden Leiterpfaden gebildet werden, gegen statische Ladungen abweisend gemacht.

Die durch den Stand der Technik bekannten Vorschläge für die antistatische Ausrüstung von Kunststoffbehältern sind technisch verhältnismäßig aufwendig.

Der Erfindung liegt die Aufgabe zugrunde, einen gattungsgemäßen Transport- und Lagerbehälter für Flüssigkeiten mit einem elektrisch leitfähigen, kostengünstig herzustellenden Innenbehälter aus Kunststoff zu entwickeln.

Diese Aufgabe ist erfindungsgemäß gelöst durch einen Transport- und Lagerbehälter für Flüssigkeiten mit den Merkmalen des Patentanspruchs 1.

Die Unteransprüche beinhalten zweckmäßige Weiterbildungen der Erfindung.

Die Erfindung beruht darauf, bei einem Transport- und Lagerbehälter für Flüssigkeiten, der mit einem Kunststoff-Innenbehälter, einem durch senkrechte und waagrechte Gitterstäbe aus Metall gebildeten Außenmantel sowie einem palettenartigen Untergestell ausgestattet ist, auf den Kunststoff-Innenbehälter eine elektrisch leitfähige Umhüllung in Form einer Gitterhaube aus dünnem Metalldraht aufzubringen, die den Innenbehälter vollkommen oder teilweise umgibt, so daß elektrische Ladungen, die sich gegebenenfalls beim Befüllen und Entleeren des Transport- und Lagerbehälters und beim Rühren von Flüssigkeiten in dem Behälter z.B. zu Mischzwecken durch Flüssigkeitsreibung auf den Oberflächen des Kunststoff-Innenbehälters bilden, über die Gitterhaube, den Außenmantel und das palettenartige Untergestellt, das ebenfalls aus einem elektrisch leitfähigen Material besteht, in den Boden abgeleitet werden können. Die elektrische Erdung des Kunststoff-Innenbehälters ermöglicht die Verwendung des Transport- und Lagerbehälters als Gefahrgutbehälter für feuergefährliche Flüssigkeiten und Emulsionen wie Lösungsmittel, Farben und Lacke mit einem Flammpunkt <35°C sowie den Einsatz des Behälters in Betriebsräumen, in denen sich eine explosive Atmosphäre durch Gase, Dämpfe oder Nebel bilden kann.

Die Erfindung ist nachstehend anhand einer perspektivischen Darstellung eines Transport- und Lagerbehälters erläutert.

Der als Ein- und Mehrwegbehälter einsetzbare Transport- und Lagerbehälter 1 für Flüssigkeiten weist als Hauptbauteile einen austauschbaren, quaderförmigen Innenbehälter 2 aus Polyethylen mit vier Seitenwänden 2a-2d, einem unteren als Ablaufboden ausgebildeten Boden 3, einem oberen Boden 4 mit einem durch einen Schraubdeckel 6 verschließbaren Einfüllstutzen 5 sowie einem Auslaufstutzen 7 mit einem Entnahmehahn 8, einen Außenmantel 9 aus sich kreuzenden senkrechten und waagerechten Gitterstäben 10, 11 aus Metall, ein palettenartiges Untergestell 12 mit einer Bodenwanne 13 aus Blech zur formschlüssigen Aufnahme des Kunststoff-Innenbehälters 2 sowie zwei Deckelstreben 14 aus Metall zum Schutz des Innenbehälters 2 auf.

Die Bodenwanne 13 steht mit einer bestimmten Bodenfreiheit auf Eck- und Mittelfüßen 15, 16 und einem Fußrahmen 17 oder Kufen, so daß die Bodenwanne 13 zum Transport des Transport- und Lagerbehälters 1 von vier Seiten von den Greifarmen eines Transportgerätes, z.B. eines Gabelstaplers, unterfahren werden kann. Die Füße 15, 16 und der Fußrahmen 17 bzw. die Kufen sind aus Metall oder einem elektrisch leitenden Kunststoff, z.B. Polyethylen mit einem Leitrußanteil, hergestellt. Das palettenartige Untergestell 12 des Transport- und Lagerbehälters 1 weist euronormgerechte Längen- und Breitenabmessungen auf.

Auf den Kunststoff-Innenbehälter 2 ist eine Umhüllung 18 aus einem elektrisch leitfähigen Material in Form eines Gitterkorbes bzw. einer Gitterhaube 19 aus dünnem Metalldraht mit einer Maschenweite kleiner als 100 x 100 Millimeter aufgebracht.

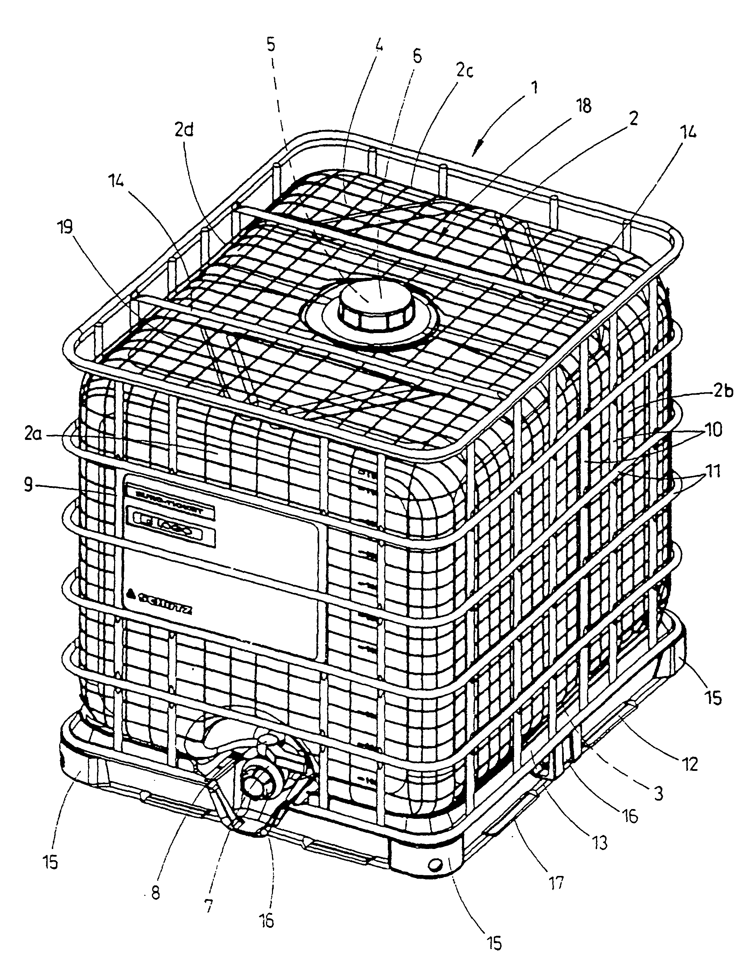

## Patentansprüche

1. Transport- und Lagerbehälter (1) für Flüssigkeiten, mit einem palettenartigen Untergestell (12), einem austauschbaren Innenbehälter (2) aus Kunststoff mit vier Seitenwänden (2a-2d), einem unteren und einem oberen Boden (3,4), einer oberen verschließbaren Einfüllöffnung und einer unteren Auslauföffnung mit einer Entleereinrichtung, einem den Innenbehälter (2) umgebenden Außenmantel (9), der aus senkrechten und waagrechten Gitterstäben (10, 11) aus Metall gebildet ist, sowie einer auf den Kunststoff-Innenbehälter aufgebrachten gewebe-, netz- oder gitterartigen Umhüllung aus einem elektrisch leitfähigen Material, die den Innenbehälter vollkommen oder teilweise umgibt, **gekennzeichnet durch** eine elektrisch leitfähige Umhüllung in Form einer auf den Innenbehälter (2) aufgesetzten Gitterhaube (19) aus dünnem Metalldraht.

## Claims

1. Transport and storage container (1) for liquids, having a pallet-like under-frame (12), an exchangeable inner container (2) formed from plastics material and having four side walls (2a-2d), a base wall and a top wall (3, 4), a closeable filling aperture at the top and a discharge aperture at the bottom, with a draining device, and having an outer casing (9) surrounding the inner container (2) and formed from vertical and horizontal metal grate rods (10, 11), as well as, applied to the plastics material inner container, a fabric-like, net-like, or lattice-like sheathing, formed from an electrically conductive material and surrounding the inner container completely or partially, **characterised by** an electrically conductive sheathing in the form of a lattice hood (19) formed from thin metal wire and placed on the inner container (2).

## Revendications

1. Cuve (1) de transport et de stockage de liquides, comprenant un bâti (12) inférieur en forme de palette, une cuve (2) intérieure qui peut être remplacée, qui est en matière plastique et qui a quatre parois (2à à 2d) latérales, un fond (3) inférieur et un fond (4) supérieur, une ouverture de remplissage supérieure qui peut être fermée et une ouverture inférieure de sortie ayant un dispositif de vidange ainsi qu'une enveloppe (3) extérieure entourant la cuve (2) intérieure, qui est formée de barreaux (10, 11) verticaux et horizontaux de treillis en métal ainsi que d'une enveloppe de type à tissu à toile ou à grille déposée sur la cuve intérieure en matière plastique et en un matériau conducteur de l'électricité qui entoure entièrement ou partiellement la cuve intérieure, **caractérisée par** une enveloppe conductrice de l'électricité sous la forme d'un capot (19) en treillis en fil métallique mince qui est posé sur la cuve (2) intérieure.
